# FASCICULE DE BREVET EUROPEEN

(11) **EP 3 011 735 B1**
(45) Date de publication et mention de la délivrance du brevet: **01.03.2017**
(21) Numéro de dépôt: 14733248.0
(22) Date de dépôt: 04.06.2014
(51) Int. Cl.: H04N 7/18

(54) **PROCEDE ET DISPOSITIF DE PRISE DE VUE POUR L'ELABORATION SECURISEE DE PREPARATIONS MEDICAMENTEUSES, SUPPORT DE POSITIONNEMENT D'OBJETS ASSOCIE**
FILMVERFAHREN UND VORRICHTUNG ZUR SICHEREN HERSTELLUNG VON ARZNEIMITTELZUBEREITUNGEN, ZUGEHÖRIGE HALTERUNG ZUR POSITIONIERUNG VON OBJEKTEN
FILMING METHOD AND DEVICE FOR SECURE PRODUCTION OF DRUG PREPARATIONS, RELATED MOUNTING FOR POSITIONING OBJECTS

(30) Priorité: 20.06.2013 FR 1355817; 02.10.2013 FR 1359545
(43) Date de publication de la demande: 27.04.2016
(73) Titulaire: Eurekam, 17000 La Rochelle (FR)
(72) Inventeur: LEFRANC, Benoît, 17137 Nieul-Sur-Mer (FR); TAMARELLE, Loïc, 17140 Lagord (FR); LE BACCON, Gaël, 17000 La Rochelle (FR)
(74) Mandataire: IP Trust
(86) Numéro de dépôt international: PCT/FR2014/051320
(87) Numéro de publication internationale: WO 2014/202859

(56) Documents cités:
- WO-A1-2009/073950
- WO-A2-02/25568
- US-A- 4 855 821
- US-A- 6 011 876
- US-A1- 2009 154 764

## Description

### DOMAINE TECHNIQUE

L'invention se rapporte à un procédé d'élaboration sécurisée, à savoir contrôlée et assistée, de préparations médicamenteuses ainsi qu'à un système d'imagerie apte à mettre en oeuvre un tel procédé.

Le domaine d'application de l'invention concerne la fabrication sécurisée de préparations médicamenteuses permettant un contrôle libératoire de ces préparations. Ce contrôle libératoire est nécessaire car les préparations médicamenteuses se déroulent selon des protocoles complexes, à partir de mélanges réactionnels entre composants, chaque composant ayant une concentration adaptée à un traitement personnalisé pour un patient donné.

Toute erreur sur la nature d'un composant ou sur sa quantité peut entraîner des conséquences graves sur le patient auquel la préparation est administrée, en particulier lorsqu'une substance active toxique intervient, telles que les préparations de cytotoxiques utilisées dans les traitements anticancéreux.

Dans la pratique, les opérateurs peuvent travailler plusieurs heures de suite, par exemple dans les unités de préparation des hôpitaux, ce qui augmente sensiblement le risque d'erreur sur la composition ou sur les quantités des composants. La sécurisation des préparations résulte habituellement d'un double contrôle visuel: vérification des étapes clés de chaque préparation et report écrit sur un support de traçabilité approprié, généralement appelé « fiche de fabrication ».

Afin de garantir la qualité des préparations médicamenteuses, l'AFSSAPS (Agence Française de Sécurité Sanitaire des Produits de Santé) a édité les " Bonnes Pratiques de Préparation " qui constituent un texte de référence destiné aux pharmaciens. Les "Bonnes Pratiques de Préparation "précisent les trois obligations auxquelles doit obéir la mise en oeuvre des matières premières utilisées dans les préparations médicamenteuses :
- la méthode de mesure des quantités de matières premières est choisie en fonction de leur nature et de la quantité à mesurer ;
- la mesure du volume ou la pesée des quantités de matières premières fait l'objet d'enregistrements ;
- les matières premières sont identifiables de manière permanente au cours des opérations précitées.

Ainsi, lors de la préparation, la nature de chaque matière première utilisée ainsi que sa masse ou son volume sont vérifiés indépendamment soit par un moyen d'enregistrement automatique, soit par une seconde personne qualifiée au sens du Code de la Santé Publique, et la vérification est notée dans le dossier de lot de la préparation. Pour répondre aux "Bonnes Pratiques de Préparation" et pour la sécurité des patients, il est donc recommandé d'effectuer un double contrôle de la nature et des quantités des compositions utilisées dans chaque préparation.

### ÉTAT DE LA TECHNIQUE

Il est connu du document de brevet US 4 855 821 un dispositif de surveillance et d'enregistrement des durées de dissolution et/ou de désintégration de comprimés médicamenteuses dans un récipient. L'objectif de la caméra est monté sur un côté du récipient. Dans ce document, la surveillance et l'enregistrement ne permettent pas un suivi en temps réel de la nature des compositions des comprimés ou de leur volume.

Le document de brevet EP 1 867 998 prévoit quant à lui une reconnaissance de matériel de laboratoire à partir d'une étiquette d'identification en radiofréquence RFID (initiales de Radio Frequency Identification Device en terminologie anglaise) associée à un lecteur d'étiquette agencé sur le support d'instrumentation, en liaison avec un taquet de positionnement. Cette solution est destinée à la localisation et l'identification de matériel de laboratoire mais elle ne permet pas le suivi de la nature, du volume ou du poids d'un matériel de laboratoire.

### EXPOSÉ DE L'INVENTION

L'invention vise à résoudre les problèmes évoqués ci-dessus en dématérialisant la fiche de fabrication par une interface graphique combinée à une analyse comparative vidéo afin de provoquer le déclenchement éventuel d'une alerte appropriée avec un suivi en temps réel et un contrôle *a posteriori* de la préparation.

Plus précisément, la présente invention a pour objet un procédé d'élaboration sécurisée d'une préparation médicamenteuse respectant une prescription sur un site déterminé. Le procédé consiste à suivre la préparation au moins en temps réel avec une interface graphique dynamique utilisant au moins un flux vidéo dit de traitement permettant la visualisation des produits sur le site de préparation avec un affichage d'informations relatives à la prescription une fois détectée par un traitement numérique d'identification des composants de la préparation et par une comparaison entre des données d'étapes de la préparation et des données d'étapes de prescriptions mémorisées, à déclencher une alerte en cas de non-conformité entre les données d'étapes de préparation et de la prescription détectée, et à valider la préparation en cas de conformation entre les données d'étapes.

Lesdites informations relatives à la prescription sont de préférence sélectionnées parmi une liste de flacons disponibles en fonction de la prescription et une liste de flacons utilisés avec l'évolution de volume de composant prélevé dans chacun d'eux. Un affichage de l'évolution du volume injecté dans un conditionnement d'administration et/ou du volume manquant et un affichage d'alerte sont également prévus, ces informations pouvant être accompagnées d'une interaction manuelle pour prélever, injecter un volume déterminé ou ajouter un flacon.

Selon des modes de mise en oeuvre avantageux :
- l'un des flux vidéo dit de traitement est focalisé sur des données d'analyse d'objets en vue d'une validation d'étapes, en particulier d'étapes clés de la préparation, et un deuxième flux vidéo dit de scène est focalisé sur une visualisation globale des actions mises en oeuvre et de la localisation des objets sur le site ;
- la détection s'étend à une identification automatique des seringues par un traitement des premiers flux vidéo à l'aide d'une reconnaissance de forme et de caractère ;
- le flux de traitement est constitué d'un double flux parallèle, chaque flux étant réglé pour une détection d'objets dans des gammes de dimension sensiblement différentes ;
- une incrémentation des volumes injectés et en conséquence un décompte du volume restant, du nombre d'injections, du nombre de flacons et des reliquats est également automatisée à partir de l'interface graphique ;
- l'alerte en temps réel est déclenchée si les flacons et/ou les volumes de composant détectés avant injection ne sont pas conformes à la prescription selon un protocole mémorisé, l'alerte n'étant supprimée et la préparation ne pouvant se poursuivre que si la conformité avec la prescription est validée en suivant des directives également affichées, l'avancement de la préparation étant alors actualisée;
- l'état d'avancement de la préparation est suivi en temps réel en fonction des données du protocole de la prescription identifiée ;
- la libération de la préparation est validée par une confirmation de la correspondance entre une étiquette d'identification du patient mémorisée et l'étiquette patient présent sur le conditionnement d'administration ;
- les étapes de la préparation étant indexées, les étapes détectées en erreur sont identifiées par comparaison avec les étapes de la prescription, et la validation ultérieure des étapes détectées en erreur, en particulier des étapes clés de la préparation, permet de poursuivre la préparation ;
- un contrôle *a posteriori* réalisé par une visualisation ultérieure des enregistrements vidéo est associé à chaque préparation avec une navigation synchrone dans au moins deux flux vidéo, un flux de traitement focalisé sur des objets de validation d'étapes de la préparation et un flux vidéo dit de scène focalisé sur une visualisation globale des actions mises en oeuvre sur le site de préparation, en liaison avec l'indexation des étapes analysées, en particulier des étapes clés ;
- une navigation dans un historique de préparations mémorisées est pilotée par un moteur de recherche intégré à l'unité de gestion numérique.

L'invention se rapporte également à un système d'imagerie sécurisé de préparations médicamenteuses sur un site déterminé comportant une interface graphique dynamique comprenant au moins une caméra de visualisation et d'enregistrement dite de traitement, ayant une focale réglée sur la détection d'objets susceptibles de contenir des composants et connectée à une unité de gestion numérique des signaux vidéo provenant de la caméra de traitement. Ladite unité possède des moyens de comparaison entre des données mémorisées de la préparation en cours à partir des premières images correspondant à ces signaux vidéo et des étapes de préparation de prescriptions mémorisées dans une mémoire de prescriptions et des moyens de sélection d'une prescription en fonction de cette comparaison. Des informations sur la prescription sélectionnée sont affichées avec les images transmises par l'unité de gestion numérique sur des moyens d'affichage. De plus, des moyens d'alerte sont aptes à être activés en cas de non-conformité d'au moins une étape de la préparation indexée avec l'étape correspondante de la prescription sélectionnée.

Selon des modes de réalisation préférés :
- les moyens d'indexation sont aptes à indexer des étapes spécifiques propres à chaque prescription, dites étapes clés, par intégration des informations concernant chaque étape clé afin de réaliser une indexation synchrone des flux vidéos lors du contrôle *a posteriori,* les moyens d'alerte étant déclenchés en cas de non-conformité avec au moins une étape de la préparation, en particulier une étape critique;
- l'interface graphique dynamique comporte au moins une autre caméra d'enregistrement et de visualisation dite de scène ayant une focale réglée pour une détection globale du site, la caméra de traitement et la caméra de scène ayant des flux synchronisés ;
- la caméra de traitement est composée de deux caméras accolées de focale réglée sur la détection d'objets dans des gammes de dimensions complémentaires ;
- la caméra de traitement est positionnée au niveau d'un support des produits et objets de préparation ;
- la caméra de scène est positionnée à un niveau supérieur de sorte à permettre une vision globale du site ;
- le support possède une conformation de structure adaptée aux contours des objets, favorisant une dépose stabilisée et reproductible des objets, en particulier flacons et seringues, et intègre un dispositif de rétro-éclairage permettant de lire avec précision des gradations de seringue.

L'invention concerne également un dispositif de prise de vue d'une pluralité d'objets tels qu'un flacon et une seringue, en vue de l'élaboration sécurisée de préparations médicamenteuses.

Selon l'invention, le dispositif comprend :
- au moins une paire d'appareils de prise de vue disposés en regard l'un de l'autre,
- un élément réfléchissant pour chacun des appareils de prise de vue,
les deux éléments réfléchissants d'une même paire d'appareils, étant disposés entre lesdits appareils le long de l'axe défini par les deux appareils et chacun orienté de façon à réfléchir en direction de l'appareil correspondant, des images d'une zone d'élaboration d'une préparation médicamenteuse.

Le dispositif peut présenter l'une et/ou l'autre des caractéristiques suivantes :
- les deux zones couvertes par les deux appareils d'une même paire d'appareils sont identiques, et les appareils présentent des objectifs de focales différentes permettant de faire le point sur des objets de tailles différentes se trouvant dans la zone d'élaboration de la préparation médicamenteuse,
- les deux éléments réfléchissants sont formés par des surfaces planes associées l'une à l'autre par un bord commun
- les deux surfaces planes sont formées par deux faces adjacentes d'un prisme à section triangulaire,
- le dispositif comprend une embase allongée aux deux extrémités desquelles sont fixés les appareils de prise de vue d'une même paire, les éléments réfléchissant associés étant fixés sur l'embase
- le dispositif comprend des moyens de fixation à un support de positionnement des objets intervenant dans l'élaboration d'une préparation médicamenteuse
- le dispositif comprend des moyens de fixation à une enceinte d'élaboration d'une préparation médicamenteuse

L'invention concerne également un support de positionnement d'objets incluant au moins une seringue et un flacon d'un fluide à prélever par la seringue, comprenant une base plane de support des objets, un écran dressé en arrière de la base et un porte seringue monté à translation vis à vis de la base entre une position désengagée indépendante de la base et une position engagée solidaire de la base.

Le support de positionnement peut présenter l'une et/ou l'autre des caractéristiques suivantes :
- le porte seringue est monté en translation par une liaison glissière avec la base, dans un creux formé à partir de la face supérieure de la base
- les surfaces supérieures de la base et du porte seringue sont coplanaires et comprennent des reliefs complémentaires d'accueil d'un flacon, qui forment lorsque le porte seringue occupe sa position engagée, un relief d'accueil du cul d'un flacon, tel qu'un creux ou une nervure
- le porte seringue comprend un chevalet de retenue des ailes d'une seringue et un pavé longitudinal d'appui pour le corps de la seringue
- lorsque le porte seringue occupe sa position engagée, le creux d'accueil du cul d'un flacon se retrouve disposé entre le chevalet de retenue des ailes d'une seringue et le pavé d'appui pour le corps de la seringue.

L'invention concerne aussi un système de prise de vue d'une pluralité d'objets en vue de l'élaboration d'une préparation médicamenteuse comprenant un dispositif de prise de vue tel que défini ci-dessus, un support de positionnement d'objets tel que décrit ci-dessus, et une enceinte d'élaboration de préparations médicamenteuses, le support de positionnement d'objets étant disposé à l'intérieur de l'enceinte, et le dispositif de prise de vue à l'extérieur de celle-ci contre une baie transparente de l'enceinte, et à une position telle que des images du support de positionnement d'objets, parviennent aux appareils de prise de vue du dispositif.

Dans ce système, de préférence, le dispositif de prise de vue et le support de positionnement d'objets comprennent des moyens complémentaires de fixation en vis à vis l'un de l'autre de part et d'autre de la baie transparente.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en perspective d'un site de préparations médicamenteuses équipé d'un exemple de système d'imagerie sécurisé de telles préparations ;
- la figure 2, une vue de l'affichage en temps réel selon l'invention intégrant une image fournie par une caméra de traitement, et
- la figure 3, une vue de l'affichage de contrôle *a posteriori* d'une préparation médicamenteuse réalisé à partir d'une caméra de traitement et d'une caméra de scène
- la figure 4, une vue en perspective de face d'un système de prise de vue de seringues et de flacons de tailles différentes, incluant une enceinte de préparation, un support pour seringues et flacons, interne à l'enceinte, et un dispositif de prise de vue externe à l'enceinte,
- la figure 5, une vue en perspective de dessus du système de la figure 4,
- la figure 6, une vue éclatée du dispositif de la figure 4,
- la figure 7, une vue éclatée du support pour seringues et flacons de la figure 4, représentant un porte seringue en position désengagée vis à vis d'une base du support,
- la figure 8, une vue en perspective du côté droit du support soutenant une seringue,
- la figure 9, une vue en perspective du côté gauche du support sans seringue.

### DESCRIPTION DÉTAILLÉE

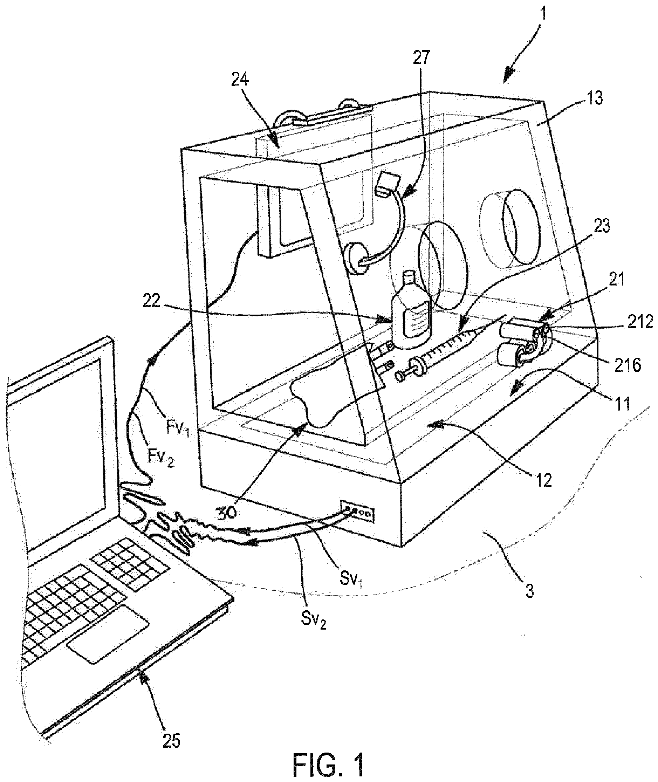

En référence à la vue en perspective de la figure 1, une hotte portative 1 intégrant un site de préparation de médicaments 10. Ce site 10 est équipé d'un système d'imagerie 20 permettant d'élaborer de telles préparations de manière sécurisée. Ce système comporte une caméra dite de traitement 21. La focale de cette caméra 21 est réglée pour réaliser une mise au point sur des contenants et des outils d'administration de médicaments, ici un flacon 22, une poche de perfusion 30 contenant une solution saline, et une seringue 23. Dans l'exemple, le flacon 22 contient du cisplatine à diluer dans la poche de perfusion 30. Pour ce faire, un prélèvement est effectué par l'opérateur dans le flacon de cisplatine 22 à l'aide de la seringue 23 puis injecté dans la poche de perfusion 30. L'opération est reproduite jusqu'à l'obtention de la dilution voulue du principe actif dans la poche pour préparer, dans l'exemple, une composant de polychimiothérapie.

Avantageusement, le fond 11 de la hotte 1 possède une conformation de structure surfacique adaptée aux contours des objets, favorisant une dépose stabilisée et reproductible des flacons et seringues, et intègre un dispositif de rétro-éclairage 12 permettant de mieux lire les gradations des seringues 23.

La caméra de traitement 21 est positionnée au niveau du fond de hotte 11 légèrement au-dessus du plan de travail 3 sur lequel est posée la hotte portative 1, c'est-à-dire sensiblement, dans l'exemple, au niveau ventral de l'opérateur (non représenté).

La caméra de traitement 21 est connectée à une unité de gestion numérique, un ordinateur portable 25 dans l'exemple. L'ordinateur 25 comporte principalement un processeur et des mémoires (non représentés) qui traitent les signaux vidéo Sv1 provenant de la caméra de traitement 21 pour fournir des images à un écran d'affichage 24 et les enregistrer.

L'écran d'affichage 24 permet alors de visualiser des informations correspondant à la préparation en cours à partir du flux vidéo Fv₁ fourni par la caméra de traitement 21.

Une autre caméra d'enregistrement et de visualisation 27, dite caméra de scène possède une focale réglée pour une détection globale du site 10. L'objectif de la caméra de scène 27 est avantageusement positionné au niveau supérieur 13 de la hotte 1 de sorte à permettre une vision globale du site 10 par transmission d'u flux vidéo FV₂ à l'écran d'affichage 24.

Les caméras de traitement 21 et de scène 27 fournissent des signaux vidéo Sᵥ₁, Sᵥ₂ synchronisés par le processeur de l'ordinateur 25 afin de constituer une interface graphique dynamique pour un contrôle en temps réel et *a posteriori.*

La caméra de traitement 21 est avantageusement composée de deux caméras accolées 21 a, 21 b, de focales réglées sur la détection d'objets - flacons et seringues en général - dans des gammes de dimensions complémentaires, inférieure à 3 cm et compris entre 3 et 10 cm dans l'exemple.

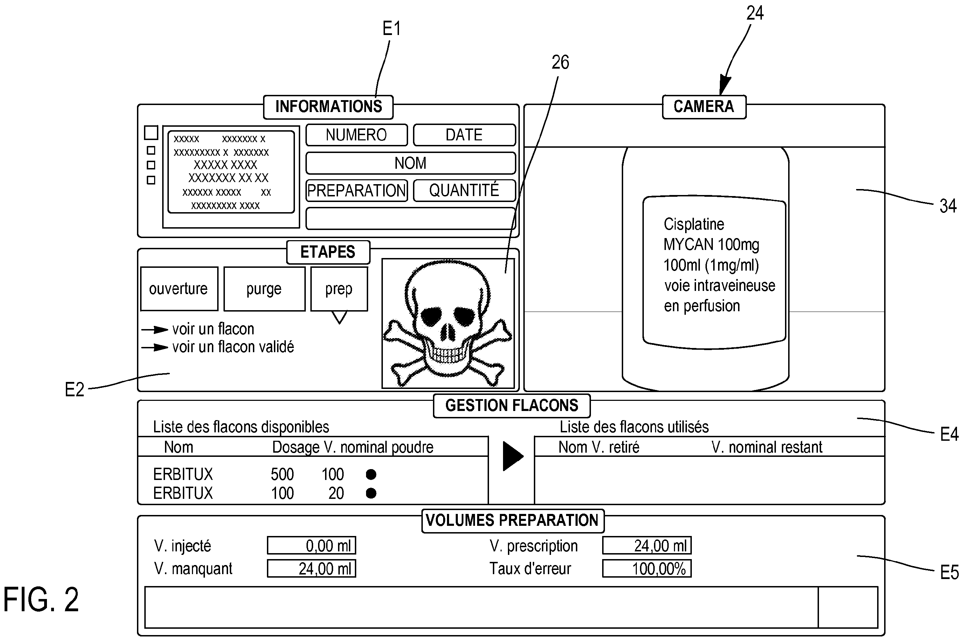

Un exemple d'affichage en temps réel sur l'écran 24 est illustré par la figure 2. L'affichage intègre ici une image 34 provenant du flux vidéo de la caméra de traitement 21 b focalisées sur le flacon 22 de cisplatine. Les flux vidéo des caméras de traitement 21 a et 21 b sont analysés par un outil de reconnaissance de forme et de caractère, intégré au processeur de l'ordinateur 25 (cf. figure 1).

L'analyse permet une identification automatique des objets utilisés, flacon 22 et seringue 23, par un traitement des premiers flux vidéo à l'aide de l'outil de reconnaissance. La détection des volumes de produit contenus dans les seringues et les flacons permet un contrôle non destructeur du principe actif mis en oeuvre dans la préparation.

La libération de la préparation est validée par une correspondance entre l'étiquette d'identification du patient mémorisée dans l'encart d'information E1 et l'étiquette du patient présente sur la seringue.

Ainsi, toutes les données figurant sur l'étiquette 22a du flacon 22, en particulier la concentration du principe actif, sont identifiées par ledit outil de reconnaissance. Ces données sont mémorisées dans l'ordinateur 25. Au cours de la préparation, des données d'analyse des contenus du flacon et de la seringue sont affichées sur l'écran 24 et enregistrées en vue de la validation de chaque étape de la préparation : quantité de liquide dans la seringue 23 et niveau de liquide dans le flacon 22 (voir ci-après).

Le processeur de l'ordinateur 25 recherche dans une mémoire, où est stocké un ensemble de prescriptions, la prescription correspondant à la préparation en cours. Pour ce faire, les prescriptions mémorisées sont indexées par étapes à l'aide d'un outil d'indexation numérique. Les étapes clés - qui sont les étapes spécifiques propres à chaque prescription - ont une indexation particulière, par exemple : EC1, EC2, ...

Le processeur compare les données mémorisées de la préparation en cours fournies par les premières images 34 enregistrées - nom des composants, quantités versées dans les seringues, etc. - et les étapes des prescriptions mémorisées. Dès qu'une étape clé de cette prescription est reconnue, la prescription correspondant à la préparation en cours est alors identifiée et affichée par ses étapes dans un encart E2. Les informations sont sélectionnées en fonction de la prescription détectée parmi une liste de flacons disponibles et une liste de flacons utilisés mémorisées dans l'ordinateur en fonction de données fournies par le centre de gestion du laboratoire.

Un affichage d'alerte 26 est intégré dans cet encart E2, ainsi que la possibilité d'interaction manuelle pour prélever ou injecter un volume déterminé, ou encore ajouter un flacon.

De plus, l'état d'avancement de la préparation est affichée en fonction des données du protocole mémorisé correspondant à la prescription identifiée: des informations concernant la gestion du volume contenu dans le flacon 22 et l'évolution des volumes du composant injectés / manquants / prescrits dans la seringue 23 sont affichées, respectivement dans les encarts E4 et E5. Ces informations de gestion sont initiées par une incrémentation des volumes injectés et en conséquence du volume restant, du nombre d'injections, du nombre de flacons et des reliquats. Cette incrémentation est automatisée à partir de l'interface graphique des flux vidéo synchronisés des caméras 21 et 27. Une telle gestion permet de baisser sensiblement les erreurs dues aux manipulations.

L'affichage d'alerte 26 est activé en temps réel dès que le flacon et/ou les volumes de composant détectés avant injection dans une étape ne sont pas conformes au protocole mémorisé de la prescription identifiée. Les étapes détectées en erreur sont identifiées par comparaison avec les étapes de la prescription. La non-conformité d'une étape clé déclenche une recherche d'erreur dans l'identification de la prescription qui a été sélectionnée.

L'affichage fournit alors des directives dans l'encart E4 et l'alerte n'est supprimée et la préparation ne se poursuit que si la conformité entre les étapes de la préparation et celles constituant le protocole de ladite prescription est validée. L'avancement de la préparation est alors réactualisée en temps réel jusqu'à la validation finale indiquée dans l'encart E2. La préparation est ainsi sécurisée par une réactivité quasi-instantanée et la reproductibilité des préparations est optimisée.

La validation des étapes détectées en erreur, en particulier des étapes clés de la préparation permet de poursuivre la préparation jusqu'à son terme.

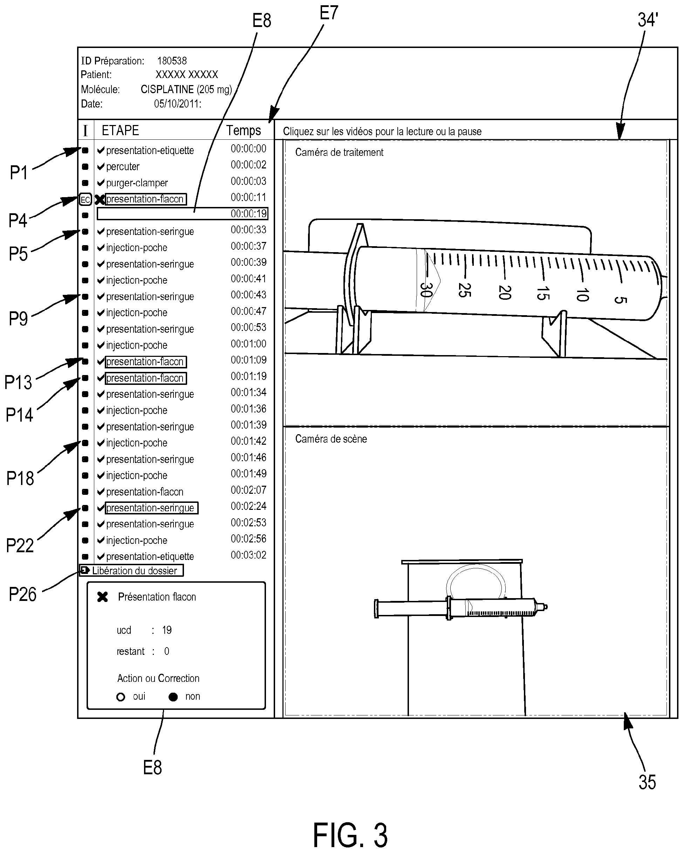

En référence à la figure 3, le contrôle *a posteriori* de la préparation à base de cisplatine est affiché sur l'écran 24. L'affichage des étiquettes mémorisées de la préparation et du patient est réalisé dans un encart E6 (nom du patient, molécule active et date d'injection). Des images enregistrées des flux vidéo de traitement 34' et de scène 35, respectivement de la caméra de traitement 21 et de la caméra de scène 27, sont également visualisées. Le flux vidéo de scène est focalisé sur une visualisation globale des actions mises en oeuvre et de la localisation des objets sur le site 10, ici le flacon 22 et la seringue 23.

Ce contrôle *a posteriori* est réalisé par une visualisation ultérieure des enregistrements vidéo à partir d'une navigation synchrone entre les flux vidéo de traitement et de scène, en liaison avec l'indexation des étapes de la préparation, des étapes clés dans le présent exemple.

Ainsi, les étapes de la préparation P1 à P 26, l'indexation des étapes clé « I », ainsi que l'instant (« temps ») de leur mise en oeuvre sont affichés dans l'encart E7. Dans l'exemple, l'étape P4 l'étape de présentation du flacon P4 n'est pas validée. Il s'agit d'une étape clé dont la correction est enregistrée comme nécessaire pour la validation finale. Cette situation est explicitée par l'affichage d'un encart particulier E8. D'autres étapes clés de présentation flacon (P13, P14) et de présentation seringue (P5, P22) sont indexées.

De manière complémentaire, les préparations antérieures sont mémorisées et une navigation dans un historique de ces préparations, pilotée par un moteur de recherche intégré, permet d'afficher des comparaisons avec la préparation en cours.

L'invention n'est pas limitée aux exemples de réalisation décrits et représentés. Ainsi, la préparation peut se faire sous hotte fixe ou tout environnement adapté pour installer le système d'imagerie.

De plus, le nombre de caméras n'est pas limité à deux ou trois mais adapté aux types de préparation visés. De même la gestion des étapes de préparation est adaptable en fonction des prescriptions.

En outre, un rapport final est élaboré sur les conditions d'élaboration de la préparation à partir des enregistrements, avec mise en évidence des erreurs et problèmes rencontrés.

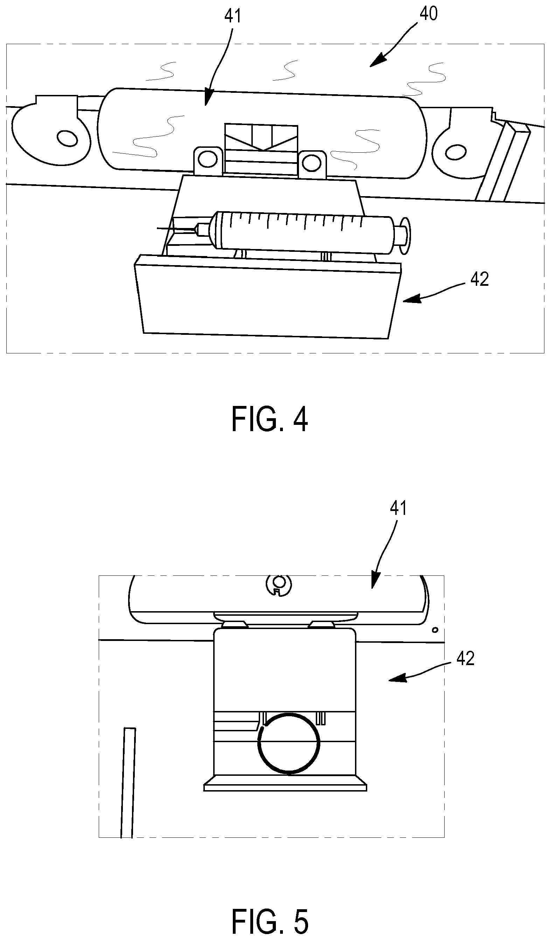

En référence aux figures 4 à 9, un exemple de système de prise de vue mettant en oeuvre le procédé d'élaboration sécurisée de préparations médicamenteuses est décrit.

Ce système est disposé de part et d'autre d'une baie transparente 40 d'une enceinte d'élaboration sécurisée d'une préparation médicamenteuse, et comprend un dispositif de prise de vue 41 disposé à l'extérieur de l'enceinte contre la paroi transparente 40, et un support de positionnement d'objets 42 disposé à l'intérieur de l'enceinte en vis à vis du dispositif de prise de vue.

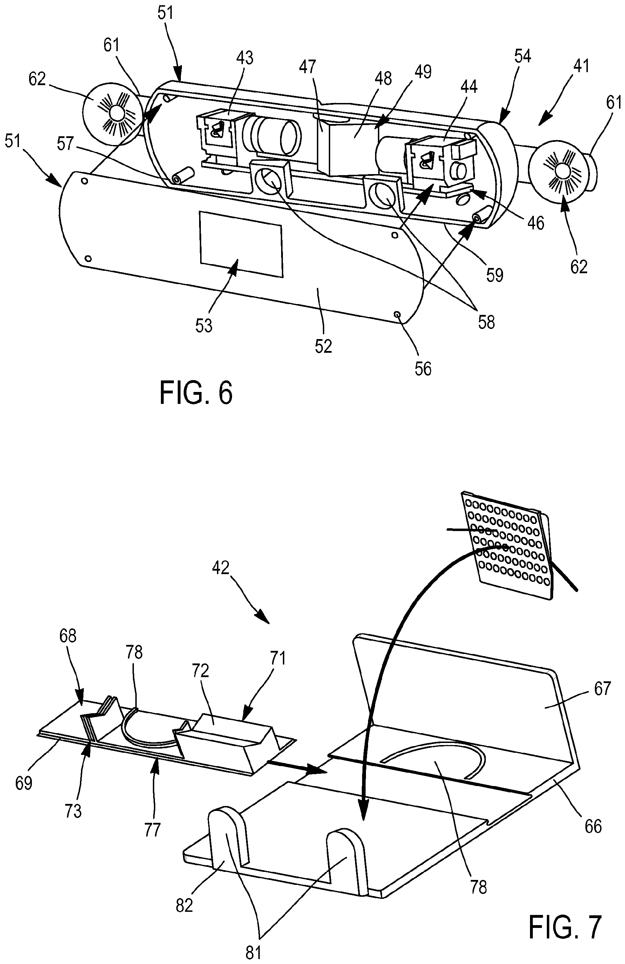

Plus précisément, comme mieux visible sur la figure 6, le dispositif de prise de vue 41 comprend deux caméras de traitement 43, 44 disposées aux deux extrémités d'une embase allongée, rectangulaire 46, un élément réfléchissant 47, 48 pour chacun des appareils de prise de vue 43, 44, disposés à mi-longueur de l'embase 46.

Les deux éléments réfléchissant 47, 48 sont orientés le long de l'axe défini par les deux caméras, de façon à réfléchir en direction de la caméra correspondante, des images du support de seringues et flacons 42.

Plus précisément, ces deux éléments réfléchissant sont formés par les deux faces rectangulaires adjacentes d'un prisme droit à base triangulaire 49, le prime étant monté sur l'embase par l'une de ses bases triangulaires.

Les deux caméras 43, 44 présentent des objectifs de focales différentes permettant de faire le point sur des objets de tailles différentes se trouvant sur le support de seringues et flacons. Par exemple, la caméra de droite pourra être consacrée à la mise au point pour des flacons et seringues de petite taille avec un objectif de 12 mm, celle de gauche à celle pour des flacons et seringues de grande taille avec un objectif de 8 mm.

Afin de doter le dispositif de prise de vue de faibles dimensions, les deux caméras présenteront elles mêmes de faibles dimensions, par exemple 47x 29 x 29 mm (L x l x h). Un exemple de caméras convenant à cette utilisation est de la marque Imaging source ®, référence DFK23F445.

L'embase allongée 46 est fixée à l'intérieur d'un coffret 51 comprenant une face avant 52 plane et sensiblement rectangulaire, dont les deux côtés courts sont légèrement arrondis, et munie d'une fenêtre centrale de visibilité 53 sensiblement rectangulaire, et une coque arrière allongée 54 à l'intérieur de laquelle l'embase est solidairement fixée, par son bord arrière longitudinal, le prisme 49 se retrouvant dans l'ouverture de la fenêtre 53 lorsque la face avant 52 du coffret referme la coque 54, afin que les images du support de seringues et flacons parviennent via ce prisme, aux deux caméras 47, 48.

La face avant 52 peut être fixée à la coque 54 au moyen de vis traversant des trous 56 prévus à cet effet aux quatre coins de la face avant et venant se visser dans un fourreau correspondant 57 prévu à cet effet sur la paroi interne de la coque arrière 54.

La coque arrière 54 comprend en outre deux pattes 58 s'étendant verticalement depuis son bord latéral inférieur 59, ces pattes étant pourvues d'un évidemment central circulaire d'accueil d'un moyen magnétique de forme complémentaire (pastille métallique ou aimantée, non représentée), destiné à retenir contre la baie vitrée 40 et la face avant 52 du coffret, le support pour seringues et flacons 42 qui est pourvu de moyens aimantés complémentaires.

La coque 54 comprend en outre deux lames latérales rigides 61 fixées sur la face externe de sa paroi arrière et dépassant de part et d'autre de ses extrémités, ces deux lames 61 portant deux ventouses 62 dirigées vers l'avant afin d'être fixées sur la baie vitrée de l'enceinte.

D'autre part, conformément à la figure 7, le support pour seringues et flacons 42 comprend une base plane de support 66, un écran incliné 67 dressé en arrière de la base destiné à former un fond blanc, et un porte seringue 68 monté à translation vis à vis de la base 66 entre une position désengagée indépendante de la base 66 (illustrée sur la figure 7) et une position engagée solidaire de la base 66 (illustrée sur la figure 4).

Plus précisément, le porte seringue 68 comprend une plaque rectangulaire 69, à une extrémité de laquelle fait saillie un pavé 71 de forme sensiblement rectangulaire mais dont la paroi supérieure est en creux longitudinal 72 (la paroi supérieure est composée de pans inclinés convergeant l'un vers l'autre et se rejoignant par un bord commun, définissant une section transversale en forme de « M ») afin de servir de support pour le corps d'une seringue, et de retenir latéralement par les pans inclinés, ce corps de seringue.

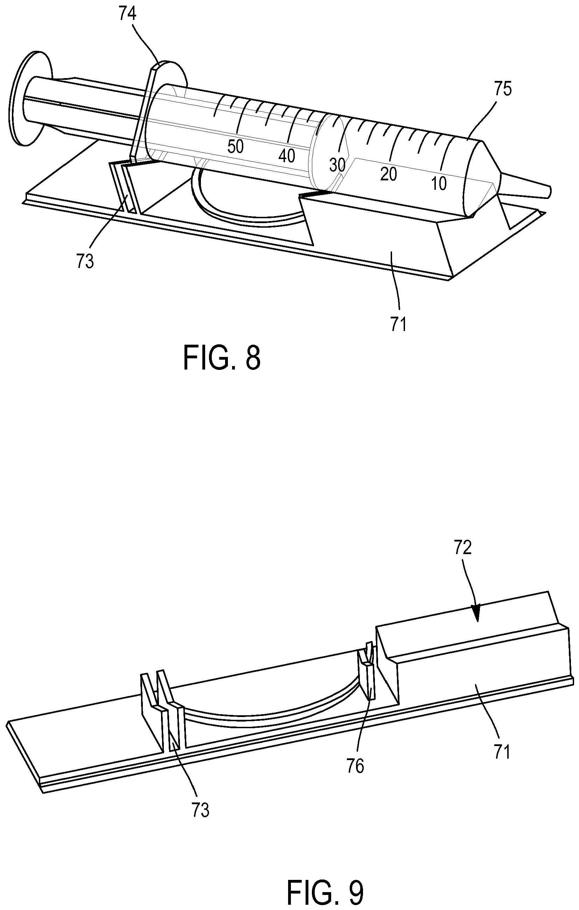

A l'autre extrémité, la plaque 69 du porte seringue 68 comprend un chevalet 73 de retenue des ailes 74 d'une seringue 75. Ce chevalet 73 est formé par deux parois parallèles, séparées l'une de l'autre d'une distance suffisante pour accueillir les ailes 74 d'une seringue 75 (voir figure 8), et présentent, à l'image du pavé 71, un contour en forme de « M » afin de supporter et retenir latéralement la partie de seringue à proximité des ailes 74.

Conformément à la figure 9, il est prévu, pour le support de seringues de petites tailles, un chevalet supplémentaire 76 entre le pavé 71 et le chevalet principal 73, en étant plus proche du pavé 71, et se présentant sous la forme d'une unique paroi 76 à contour en forme de « M » et dont le sillon se retrouve au même niveau que celui du pavé 71.

La plaque 69 du porte seringue 68 comprend conformément à la figure 7, deux bords latéraux amincis 77 susceptibles de coulisser dans des gorges formées sur les bords latéraux d'un creux d'accueil de la plaque ménagé dans la base 66, afin de pouvoir engager par coulissement le support de seringues dans la base jusqu'à une position engagée (figure 4).

Dans cette position engagée, le support de seringues 68 et la base 66 définissent ensemble un relief d'accueil pour le cul d'un flacon 78.

En effet, les surfaces supérieures de la base 66 et de la plaque 69 du porte seringue 68 sont coplanaires lorsque le porte seringues occupe sa position engagée et comprennent des creux complémentaires 78 d'accueil d'un flacon en forme de demi disque, et qui forment lorsque le porte seringue occupe sa position engagée, un creux d'accueil circulaire du cul d'un flacon, ce creux se retrouvant disposé entre le chevalet de retenue 73 et le pavé d'appui 71. Bien entendu, un autre relief, tel qu'une nervure circulaire, pourra remplir la même fonction.

La base 66 porte les moyens magnétiques complémentaires 81 de ceux 58 prévus sur le dispositif de prise de vue. Plus précisément, ces moyens magnétiques (pastille aimantée ou métallique, suivant celle utilisée pour les moyens magnétiques du dispositif de prise de vue) sont logées à l'intérieur de deux ergots 82 faisant saillie verticalement du bord de la base 66 opposé à l'écran 67, et présentant une paroi avant plane pouvant se plaquer contre la face interne de la baie vitrée, au niveau des pattes correspondantes 58 du dispositif de prise de vue.

Le système tel que décrit ci-dessus permet la mise en oeuvre du procédé d'élaboration sécurisé de préparations médicamenteuse, même lorsque des seringues et des flacons de différentes tailles sont utilisés, grâce à la pluralité d'appareils de prise de vue à objectifs différents utilisés et aux éléments réfléchissant permettant à ces appareils de recueillir des images de la même zone : le support de seringues et de flacons.

Cet objectif est en outre atteint avec le plus faible encombrement possible du fait de l'utilisation d'un prisme central pour les deux appareils de prise de vue.

## Revendications

1. Procédé d'élaboration sécurisée d'une préparation médicamenteuse respectant une prescription sur un site déterminé (10), **caractérisé en ce qu'**il consiste à suivre la préparation au moins en temps réel avec une interface graphique dynamique (21, 27) utilisant au moins un flux vidéo (FV1, FV2) dit de traitement permettant la visualisation des produits (22, 23, 30) sur le site de préparation (10) avec un affichage d'informations (24) relatives à la prescription une fois détectée par un traitement numérique d'identification des composants de la préparation et par une comparaison entre des données d'étapes de la préparation et des données d'étapes de prescriptions mémorisées (E2, E4, E5), à déclencher une alerte (26) en cas de non-conformité entre les données d'étapes de préparation et de la prescription détectée, et à valider la préparation (E2) en cas de conformation entre les données d'étapes.

2. Procédé d'élaboration sécurisée selon la revendication 1, dans lequel lesdites informations relatives à la prescription sont de préférence sélectionnées parmi une liste de flacons disponibles en fonction de la prescription et une liste de flacons utilisés avec l'évolution de volume de composant prélevé dans chacun d'eux, un affichage de l'évolution du volume injecté dans un conditionnement d'administration et/ou du volume manquant (E5), et un affichage d'alerte (26) étant également prévus.

3. Procédé d'élaboration sécurisée selon l'une quelconque des revendications 1 ou 2, dans lequel l'un des flux vidéo (FV1) dit de traitement est focalisé sur des données d'analyse d'objets (E4, E5) en vue d'une validation d'étapes (E2), en particulier d'étapes clés de la préparation, et un deuxième flux vidéo (FV2) dit de scène est focalisé sur une visualisation globale des actions mises en oeuvre et de la localisation des objets sur le site (10).

4. Procédé d'élaboration sécurisée selon l'une quelconque des revendications précédentes, dans lequel la détection s'étend à une identification automatique des seringues (23) par un traitement des premiers flux vidéo (FV1) à l'aide d'une reconnaissance de forme et de caractère.

5. Procédé d'élaboration sécurisée selon l'une quelconque des revendications précédentes, dans lequel le flux de traitement (FV1) est constitué d'un double flux parallèle, chaque flux étant réglé pour une détection d'objets (22, 23, 30) dans des gammes de dimension sensiblement différentes.

6. Dispositif de prise de vue d'une pluralité d'objets tels qu'un flacon et une seringue, en vue de l'élaboration sécurisée de préparations médicamenteuses, comprenant :
- au moins une paire d'appareils de prise de vue (43, 44) disposés en regard l'un de l'autre,
- un élément réfléchissant (47, 48) pour chacun des appareils de prise de vue, formé par deux faces adjacentes d'un prisme à section triangulaire, interposé entre lesdits appareils le long de l'axe défini par les deux appareils et chacune orientée de façon à réfléchir en direction de l'appareil correspondant, des images d'une zone même zone d'élaboration d'une préparation médicamenteuse, les deux appareils (43, 44) présentant des objectifs de focales différentes permettant de faire le point sur des objets de tailles différentes se trouvant dans la zone d'élaboration de la préparation médicamenteuse,
- des moyens de fixation (58) à un support de positionnement des objets intervenant dans l'élaboration d'une préparation médicamenteuse,
- des moyens de fixation à une enceinte d'élaboration d'une préparation médicamenteuse.

7. Système d'imagerie sécurisé de préparations médicamenteuses sur un site déterminé (10) apte à mettre en oeuvre le procédé selon l'une quelconque des revendications précédentes, **caractérisé en ce qu'**il comporte une interface graphique dynamique comprenant au moins une caméra de visualisation et d'enregistrement dite de traitement (21 ; 21 a, 21 b) ayant une focale réglée sur la détection d'objets susceptibles de contenir des composants et connectée à une unité de gestion numérique (25) des signaux vidéo (SV1) provenant de la caméra de traitement (21 ; 21 a, 21 b), **en ce que** ladite unité (25) possède des moyens de comparaison entre des données mémorisées de la préparation en cours à partir des premières images (34) correspondant à ces signaux vidéo (SV1) et des étapes de préparation de prescriptions mémorisées dans une mémoire de prescriptions et des moyens de sélection d'une prescription en fonction de cette comparaison, **en ce que** des informations sur la prescription sélectionnée sont affichées avec les images transmises par l'unité de gestion numérique sur des moyens d'affichage (24), et **en ce que** des moyens d'alerte (26) sont aptes à être activés en cas de non-conformité d'au moins une étape de la préparation indexée avec l'étape correspondante de la prescription sélectionnée.

8. Système d'imagerie sécurisé selon la revendication précédente, dans lequel les moyens d'indexation sont aptes à indexer des étapes spécifiques propres à chaque prescription, dites étapes clés, par une indexation particulière (EC1, EC2, ...) et les moyens d'alerte (26) sont déclenchés en cas de non-conformité avec au moins une étape de la préparation, en particulier une étape critique.

9. Système d'imagerie sécurisé selon l'une quelconque des revendications 7 ou 8, dans lequel l'interface graphique dynamique comporte au moins une autre caméra d'enregistrement et de visualisation dite de scène (27) ayant une focale réglée pour une détection globale du site (10), la caméra de traitement (21 ; 21a, 21b) et la caméra de scène (27) ayant des flux synchronisés.

10. Système d'imagerie sécurisé selon l'une quelconque des revendications 7 à 9, comprenant un dispositif de prise de vue selon la revendication 6, un support de positionnement d'objets, et une enceinte d'élaboration de préparations médicamenteuses, le support de positionnement d'objets (42) étant disposé à l'intérieur de l'enceinte, et le dispositif de prise de vue (41) à l'extérieur de celle-ci contre une baie transparente (40) de l'enceinte, et à une position telle que des images du support de positionnement d'objets, parviennent aux appareils de prise de vue du dispositif.

11. Système selon la revendication 10, dans lequel le support de positionnement d'objets inclut au moins une seringue et un flacon d'un fluide à prélever par la seringue, comprenant une base plane (66) de support des objets, un écran (67) dressé en arrière de la base et un porte seringue (68) monté à translation vis à vis de la base entre une position désengagée indépendante de la base et une position engagée solidaire de la base.

12. Système selon la revendication 11, dans lequel le porte seringue est monté en translation par une liaison glissière avec la base.

13. Système selon la revendication 12, dans lequel les surfaces supérieures de la base et du porte seringue du support sont coplanaires et comprennent des reliefs complémentaires (78) d'accueil d'un flacon, qui forment lorsque le porte seringue occupe sa position engagée, un relief d'accueil du cul d'un flacon, tel qu'un creux ou une nervure.

14. Système selon l'une des revendications 11 à 13, dans lequel le porte seringue du support comprend un chevalet de retenue (73) des ailes d'une seringue et un pavé longitudinal (71) d'appui pour le corps de la seringue.

15. Système selon la revendication 14, dans lequel lorsque le porte seringue occupe sa position engagée, le creux d'accueil (78) du cul d'un flacon se retrouve disposé entre le chevalet de retenue (73) des ailes d'une seringue et le pavé d'appui (71) pour le corps de la seringue.

## Patentansprüche

1. Gesichertes Ausarbeitungsverfahren einer medikamentösen Zubereitung, das eine Verschreibung an einem bestimmten Situs (10) beachtet, **dadurch gekennzeichnet, dass** es in der Befolgung der Zubereitung wenigstens in Echtzeit mit einer dynamischen graphischen Schnittstelle (21, 27), die wenigstens einen Videostrom (FV1, FV2), bezeichnet als Bearbeitungsstrom, verwendet, der die Anzeige der Produkte (22, 23, 30) auf dem Zubereitungssitus (10) mit einer Anzeige von Informationen (24) relativ zur Verschreibung nach der Erfassung durch eine digitale Verarbeitung zur Identifizierung der Komponenten der Zubereitung, und durch einen Vergleich zwischen den Stufendaten der Zubereitung und der Stufendaten von gespeicherten Verschreibungen (E2, E4, E5) zulässt, in dem Auslösen eines Alarms (26) bei einem Konformitätsmangel zwischen den Stufendaten der Zubereitung und der erfassten Verschreibung und der Validierung der Zubereitung (E2) bei einer Konformation zwischen den Stufendaten besteht.

2. Gesichertes Ausarbeitungsverfahren gemäß Anspruch 1, bei dem die genannten Informationen relativ zur Verschreibung bevorzugt aus einer Liste von Fläschchen, die in Abhängigkeit von der Verschreibung verfügbar sind, und einer Liste von Fläschchen, die mit der Entwicklung des Volumens der Komponente, das von jedem von ihnen entnommen wird, einer Anzeige der Entwicklung des in eine Verabereichungsverpackung injizierten Volumens und / oder des fehlenden Volumens (E5) ausgewählt sind und wobei eine Alarmanzeige (26) ebenfalls vorgesehen ist.

3. Gesichertes Ausarbeitungsverfahren gemäß irgendeinem der Ansprüche 1 oder 2, bei dem einer der Videoströme (FV1), bezeichnet als Bearbeitungsstrom, für eine Stufenvalidierung (E2), insbesondere Schlüsselstufen der Zubereitung auf Objektanalysedaten (E4, E5) konzentriert ist, und ein zweiter Videostrom (FV2), bezeichnet als Szene, auf eine globale Visualisierung der umgesetzten Aktionen und der Lokalisierung der Objekte an dem Situs (10) konzentriert ist.

4. Gesichertes Ausarbeitungsverfahren gemäß irgendeinem der voranstehenden Ansprüche, bei dem die Erfassung sich auf eine automatische Identifizierung der Spritzen (23) durch eine Behandlung der ersten Videoströme (FV1) mithilfe einer Erkennung der Form und des Merkmals erstreckt.

5. Gesichertes Ausarbeitungsverfahren gemäß irgendeinem der voranstehenden Ansprüche, bei dem der Bearbeitungsstrom (FV1) aus einem doppelten parallelen Strom gebildet ist, wobei jeder Strom auf eine Objekterfassung (22, 23, 30) in deutlich unterschiedlichen Abmessungsserien eingestellt ist.

6. Bildaufnahmevorrichtung einer Vielzahl von Objekten, wie z. B. eines Fläschchens und einer Spritze, zur gesicherten Ausarbeitung von medikamentösen Zubereitungen, umfassend:
- wenigstens ein Paar Bildaufnahmegeräte (43, 44), die einander gegenüber angeordnet sind,
- ein reflektierendes Element (47, 48) für jedes der Bildaufnahmegeräte, das durch zwei anliegende Seiten eines Prismas mit dreieckigem Querschnitt gebildet ist, das zwischen den genannten Geräten entlang der Achse zwischengeschaltet ist, die von den zwei Geräten definiert ist, und die jede derart ausgerichtet ist, dass in Richtung des entsprechenden Geräts Bilder eines Bereichs desselben Ausarbeitungsbereichs einer medikamentösen Zubereitung reflektiert werden, wobei die zwei Geräte (43, 44) Objekte mit unterschiedlichen Brennweiten aufweisen, die die Bestimmung von Objekten unterschiedlicher Größe erlauben, die sich in dem Ausarbeitungsbereich der medikamentösen Zubereitung befinden,
- Befestigungsmittel (58) an einem Positionierungsträger der Objekte, die bei der Ausarbeitung einer medikamentösen Zubereitung einfließen,
- Befestigungsmittel an einer Ausarbeitungseinfassung einer medikamentösen Zubereitung

7. Gesichertes Bildgebungssystem von medikamentösen Zubereitungen auf einem bestimmen Situs (10), das geeignet ist, das Verfahren gemäß irgendeinem der voranstehenden Ansprüche umzusetzen, **dadurch gekennzeichnet, dass** es eine dynamische graphische Schnittstelle umfasst, die wenigstens eine Anzeige- und Aufnahmekamera, bezeichnet als Bearbeitungskamera, (21; 21a; 21b) umfasst, die eine Brennweite hat, welche auf die Erfassung von Objekten eingestellt ist, die geeignet sind, Komponenten zu enthalten und an eine digitale Verwaltungseinheit (25) der Videosignale (SV1) angeschlossen ist, die aus der Bearbeitungskamera (21; 21a, 21b) stammen, dass die genannte Einheit (25) Vergleichsmittel zwischen den gespeicherten Daten der laufenden Zubereitung ausgehend von den ersten Bildern (34) besitzt, die diesen Videosignalen (SV1) entsprechen, und Zubereitungsstufen von Verschreibungen, die in einem Verordnungsspeicher gespeichert sind, und Auswahlmittel einer Verschreibung in Abhängigkeit von diesem Vergleich, dass diese Informationen über die ausgewählte Verschreibung mit den Bildern angezeigt werden, die durch die digitale Verwaltungseinheit auf Anzeigemittel (24) übertragen werden und dass Alarmmittel (26) geeignet sind, bei einem Konformitätsmangel wenigstens einer Stufe der indexierten Zubereitung mit der entsprechenden Stufe der ausgewählten Zubereitung aktiviert zu werden.

8. Gesichertes Bildgebungssystem gemäß dem voranstehenden Anspruch, bei dem die Indexierungsmittel geeignet sind, die jeder Verschreibung eigenen spezifischen Stufen, bezeichnet als Schlüsselstufen, durch eine besondere Indexierung (EC1, EC2, usw.) zu indexieren und die Alarmmittel (26) bei einem Konformitätsmangel mit wenigstens einer Stufe der Zubereitung, insbesondere einer kritischen Stufe, ausgelöst werden.

9. Gesichertes Bildgebungssystem gemäß irgendeinem der Ansprüche 7 oder 8, bei dem die dynamische graphische Schnittstelle wenigstens eine weitere Anzeige- und Aufnahmekamera, bezeichnet als Szenekamera (27) umfasst, die eine eingestellte Brennweite für eine globale Erfassung des Situs (10) hat, wobei die Bearbeitungskamera (21; 21a, 21b) und die Szenekamera (27) synchronisierte Ströme haben.

10. Gesichertes Bildgebungssystem gemäß irgendeinem der Ansprüche 7 bis 9, umfassend eine Bildaufnahmevorrichtung gemäß Anspruch 6, einen Objektpositionierungsträger und eine Ausarbeitungseinfassung von medikamentösen Zubereitungen, wobei der Objektpositionierungsträger (42) im Innern der Einfassung und die Bildaufnahmevorrichtung (41) an der Außenseite derselben gegen eine transparente Fensterscheibe (40) der Einfassung und in einer Position derart angeordnet sind, dass Bilder des Objektpositionierungsträgers zu den Bildaufnahmegeräten der Vorrichtung gelangen.

11. System gemäß Anspruch 10, bei dem der Objektpositionierungsträger wenigstens eine Spritze und ein Fläschchen einer durch die Spritze zu entnehmenden Flüssigkeit einschließt, umfassend eine ebenerdige Trägerbasis (66) der Objekte, einen hinter der Basis aufgerichteten Bildschirm (67) und einen Spritzenträger (68), der in Translation gegenüber der Basis zwischen einer losgelösten, von der Basis unabhängigen Position und einer fest mit der Basis verbundenen, eingegriffenen Position montiert ist.

12. System gemäß Anspruch 11, bei dem der Spritzenträger in Translation durch eine gleitende Verbindung mit der Basis montiert ist.

13. System gemäß Anspruch 12, bei dem die oberen Flächen der Basis und des Spritzenträgers des Trägers koplanar sind und komplementäre Aufnahmereliefs (78) eines Fläschchens umfassen, die, wenn der Spritzenträger seine eingegriffene Position einnimmt, ein Aufnahmerelief des Fläschchenbodens bilden, wie z. B. eine Aushöhlung oder eine Rippung.

14. System gemäß einem der Ansprüche 11 bis 13, bei dem der Spritzenträger des Trägers ein Festhaltegestell (73) der Flügel einer Spritze und einen länglichen Aufstützblock (71) für den Körper der Spritze umfasst.

15. System gemäß Anspruch 14, bei dem, wenn der Spritzenträger seine eingegriffene Position einnimmt, die Aufnahmeaushöhlung (78) des Bodens eines Fläschchens sich zwischen dem Festhaltegestell (73) der Flügel einer Spritze und dem Aufstützblock (71) für den Körper der Spritze befindet.

## Claims

1. A method for the secure production of a drug preparation complying with a prescription on a determined site (10), **characterized in that** it consists in at least the real-time monitoring of the preparation using a dynamic graphic interface (21, 27), using at least one so-called processing video stream (FV1, FV2) enabling to visualize the products (22, 23, 30) on the preparation site (10) with the display of information (24) relative to the prescription once it has been detected by a preparation components identification digital processing and through a comparison between data from the steps of the preparation and data from the steps of stored prescriptions (E2, E4, E5), in triggering a warning (26) in the event of a non-compliance between the data from the steps of the preparation and of the detected prescription, and in validating the preparation (E2) in the event of a compliance between the steps data.

2. A method for secure production according to claim 1, wherein said information relative to the prescription are preferably selected from a list of available bottles in accordance with the prescription and a list of used bottles, with the evolution of the component volume sampled from each one of these, with the display of the evolution of the volume injected into a delivery packaging and/or the missing volume (E5), and the display of a warning (26) also being provided for.

3. A method for secure production according to any one of claims 1 or 2, wherein one so-called processing video stream (FV1) is focused on objects analysis data (E4, E5) with the aim of validating steps (E2), specifically key steps of the preparation, and a second so-called scene video stream (FV2) is focused on a global visualization of the actions undertaken and the positioning of the objects on the site (10).

4. A method for secure production according to any one of the preceding claims, wherein the detection extends to an automatic identification of the syringes (23) by processing the first video streams (FV1) using pattern and character recognition.

5. A method for secure production according to any one of the preceding claims, wherein the processing stream (FV1) consists of two parallel streams, with each stream being adjusted for detecting objects (22, 23, 30) in substantially different dimension ranges.

6. A device for filming a plurality of objects such as a bottle and a syringe, for the secure production of drug preparations, comprising:
- at least a pair of filming devices (43, 44) so positioned as to face each other,
- a reflective element (47, 48) for each one of the filming devices, formed by two adjacent faces of a prism having a triangular section, inserted between said devices along the axis defined by both devices and each one being so directed as to reflect towards the corresponding device images of the same drug preparation production zone, with both devices (43, 44) having lens with different focal distances making it possible to zoom on objects with different sizes in the drug preparation production zone,
- means (58) for attachment to a mounting for positioning the objects used when producing a drug preparation,
- means for attachment to a drug preparation production enclosure.

7. A secure imaging system for drug preparations on a determined site (10) adapted to implement the method according to any one of the preceding claims, **characterized in that** it comprises a dynamic graphic interface comprising at least one so-called processing visualization and recording camera (21; 21a, 21b) having a focal distance adjusted for detecting objects liable to contain components and connected to a digital unit for managing (25) video signals (SV1) from the processing camera (21; 21a, 21b), **in that** said unit (25) has means for establishing a comparison between the stored data of the in-process preparation using first images (34) corresponding to such video signals (SV1) and steps for preparing stored prescriptions in a prescription memory and means for selecting a prescription in accordance with such comparison, **in that** information on the selected prescription are displayed together with the images transmitted by the digital managing unit onto display means (24), and **in that** warning means (26) are adapted to be activated in the event of a non-compliance of at least one step of the indexed preparation with the corresponding step of the selected prescription.

8. A secure imaging system according to the preceding claim, wherein the indexing means are adapted to index steps specific to each prescription, so-called key steps, using a particular indexing (EC1, EC2, ...) and the warning means (26) are triggered in the event of a non-compliance with at least one step of the preparation, specifically a critical step.

9. A secure imaging system according to any one of claims 7 or 8, wherein the dynamic graphic interface comprises at least another so-called scene recording and visualization camera (27) having a focal distance adjusted for a global detection of the site (10), with the processing camera (21; 21a, 21b) and the scene camera (27) having synchronized streams.

10. A secure imaging system according to any one of claims 7 to 9, comprising a filming device according to claim 6, a mounting for positioning objects, and a drug preparation production enclosure, with the mounting for positioning objects (42) being positioned inside the enclosure, and the filming device (41) outside same against a transparent window (40) of the enclosure, and in such a position that images of the mounting for positioning objects reach the device filming devices.

11. A system according to claim 10, wherein the mounting for positioning objects includes at least one syringe and a bottle of a fluid to be sampled with the syringe, comprising a flat base (66) for supporting objects, a screen placed at the back of the base and a syringe holder (68) so mounted as to translate with respect to the base between a disengaged position independent of the base and an engaged position integral with the base.

12. A system according to claim 11, wherein the syringe holder is so mounted as to translate through a sliding connection with the base.

13. A system according to claim 12, wherein the upper surfaces of the base and of the syringe holder of the support are co-planar and comprise additional reliefs (78) for receiving a bottle, which compose a relief for receiving the bottom of a bottle, such as a recess or a rib, when the syringe holder is in its engaged position.

14. A system according to one of claims 11 to 13, wherein the syringe holder of the support comprises a stand (73) for holding the wing-like portion of a syringe and a longitudinal block (71) for resting the body of the syringe.

15. A system according to claim 14, wherein, when the syringe holder is in its engaged position, the recess (78) receiving the bottom of a bottle is positioned between the stand (73) for holding the wing-like portions of a syringe and the block (71) for resting the body of the syringe.
